# EUROPEAN PATENT SPECIFICATION

(11) **EP 4 471 086 B1**
(45) Date of publication and mention of the grant of the patent: **07.10.2026**
(21) Application number: 23746809.5
(22) Date of filing: 19.01.2023
(51) Int. Cl.: C08L 67/00, B29C 48/40, B29C 48/625, C08K 5/5313, C08K 5/5399, C08L 63/00, C08L 85/02

(54) **THERMOPLASTIC POLYESTER RESIN COMPOSITION, METHOD FOR PRODUCING THERMOPLASTIC POLYESTER RESIN COMPOSITION, AND MOLDED ARTICLE**
THERMOPLASTISCHE POLYESTERHARZZUSAMMENSETZUNG, VERFAHREN ZUR HERSTELLUNG EINER THERMOPLASTISCHEN POLYESTERHARZZUSAMMENSETZUNG UND FORMKÖRPER
COMPOSITION DE RÉSINE DE POLYESTER THERMOPLASTIQUE, PROCÉDÉ DESTINE À PRODUIRE LADITE COMPOSITION ET ARTICLE MOULÉ

(30) Priority: 25.01.2022 JP 2022009038
(43) Date of publication of application: 04.12.2024
(73) Proprietor: Toray Industries, Inc., Tokyo 103-8666 (JP)
(72) Inventor: MIYAMOTO, Kohei, Nagoya-shi, Aichi 455-8502 (JP); TOJO, Yusuke, Nagoya-shi, Aichi 455-8502 (JP); UMETSU, Hideyuki, Nagoya-shi, Aichi 455-8502 (JP)
(74) Representative: Mewburn Ellis LLP
(86) International application number: PCT/JP2023/001499
(87) International publication number: WO 2023/145596

(56) References cited:
- WO-A1-2014/021101
- WO-A1-2021/153414
- JP-A- 2008 150 598
- JP-A- 2009 292 897
- JP-A- 2010 024 324

## Description

### TECHNICAL FIELD

The present invention relates to a thermoplastic polyester resin composition, a method for the production thereof, and a molded article obtained by molding the thermoplastic polyester resin composition.

### BACKGROUND ART

With various properties such as excellent injection moldability and mechanical properties, thermoplastic polyester resins are utilized in a wide range of fields such as mechanical machine parts, electric and electronic components, and automotive parts. However, since the thermoplastic polyester resins are essentially combustible, in order to use the thermoplastic polyester resin as an industrial material for mechanical machine parts, electric and electronic components, automotive parts, and the like, safety against flame, that is, flame retardancy is required, and a high degree of flame retardancy to meet the V-0 requirements specified in UL-94. As a method of imparting flame retardancy to a polyester resin, a method of compounding a halogen-based organic compound as a flame retardant and an antimony compound as a flame retardant aid in a resin is common. However, due to an increase in environmental awareness, there is a movement to worry about the influence of halogen-based organic compounds on the environment. In addition, in recent years, electric vehicles have attracted attention due to the increase in environmental awareness, and in a case where the electric vehicles are used under an environment where a polyester resin applied thereto is energized, safety against tracking breakdown in which the resin catches fire due to its decomposition or carbonization caused by discharge, that is, tracking resistance is required, and a high level of tracking resistance indicating CTI rank 0 of IEC60112 standards is often required. However, when the above-mentioned halogen-based organic compound and the antimony compound are compounded in a polyester resin, there is a problem that tracking resistance is significantly impaired. Therefore, in recent years, there has been stronger demand for the use of non-halogen type flame retardants completely free from halogens, and it has been proposed to blend a phosphorus-based flame retardant such as a phosphinate and a phosphazene compound, and a nitrogen-based flame retardant such as melamine cyanurate as a flame retardant.

As a flame-retardant resin composition using a non-halogen type flame retardant, for example, there are disclosed a resin composition obtained by blending thermoplastic polyester, a phosphinate, a phosphazene compound, a nitrogen-based flame retardant, a multifunctional epoxy compound, and a polyolefin resin (Patent Document 1), a resin composition obtained by blending a thermoplastic polyester resin, a heat-moisture resistant phosphorus-based flame retardant such as diamine phosphate salt, a phosphorus-based flame retardant other than the preceding one, a nitrogen-containing flame retardant, and a dripping inhibitor (Patent Document 2), a resin composition obtained by blending a thermoplastic resin, a phosphinate, and a corrosion-resistant agent having a specific structure (Patent Document 3), a resin composition obtained by blending two or more phosphorus-based flame retardants selected from a thermoplastic polyester resin, a methacrylic resin, a condensed phosphoric acid ester, a phosphazene compound, and an organic phosphinic acid metal salt, and a nitrogen-based flame retardant (Patent Document 4), a resin composition obtained by blending a thermoplastic polyester resin, a phosphinate, a nitrogen compound, and one or more phosphorus compounds selected from among a phosphoric acid ester compound, a phosphazene compound, and a phosphaphenanthrene compound (Patent Document 5), a resin composition obtained by blending a thermoplastic polyester resin, a phosphinate, a phosphazene compound, a nitrogen-containing flame retardant, an enhancer, and other additives (Patent Document 6), a flame retardant preparation for a thermoplastic polymer including a phosphinate, a phosphazene compound, an inorganic zinc compound, and a nitrogen-containing flame retardant (Patent Document 7), a resin composition obtained by blending a polybutylene terephthalate-based resin, a thermoplastic polyester elastomer, a phosphazene compound, an epoxy compound, and polyorganosiloxane (Patent Document 8), a resin composition obtained by blending a polybutylene terephthalate resin, a phosphinate salt, a phosphazene compound, and a nitrogen-containing cyclic compound (Patent Document 9), and a resin composition obtained by blending a polyalkylene terephthalate resin, a polystyrene-based resin, a compatibilizer, a phosphorus-based flame retardant selected from among phosphazene and phosphinate salts, and a nitrogen-based flame retardant, and a boric acid metal salt (Patent Document 10).

Since the thermoplastic polyester resins are prone to be degraded by hydrolysis, in order to use the thermoplastic polyester resin as an industrial material for mechanical machine parts, electric and electronic components, automotive parts, and the like, in addition to a balance of general chemical and physical properties, it has been required to have long-term hydrolysis resistance. As a technique for improving hydrolysis resistance of a thermoplastic polyester resin, for example, Patent Document 11 discloses a resin composition obtained by blending a biphenyl aralkyl epoxy resin or a dicyclopentadiene epoxy resin with a thermoplastic polyester resin.

### PRIOR ART DOCUMENT

### PATENT DOCUMENTS

Patent Document 1: WO 2021/153414
Patent Document 2: Japanese Patent Laid-open Publication No. 2019-44037
Patent Document 3: WO 2011/007687
Patent Document 4: WO 2014/021101
Patent Document 5: Japanese Patent Laid-open Publication No. 2010-202748
Patent Document 6: Japanese Translation of PCT International Application Publication No. 2013-544921
Patent Document 7: Japanese Translation of PCT International Application Publication No. 2018-525449
Patent Document 8: Japanese Patent Laid-open Publication No. 2006-152122
Patent Document 9: WO 2014/084157
Patent Document 10: Japanese Patent Laid-open Publication No. 2009-292897
Patent Document 11: WO 2015/072216

### SUMMARY OF THE INVENTION

### PROBLEMS TO BE SOLVED BY THE INVENTION

However, in recent years, there has been an increasing demand for reduction in thickness and weight as well as reduction in size of molded articles, and in particular, in applications of thin-walled molded articles such as connectors, the resin temperature may be increased in order to decrease the melt viscosity of a material during injection molding and to fill the material. In that case, there is a problem that resin degradation occurs due to melt retention at a high temperature, and hydrolysis resistance of the resulting material deteriorates. Since the phosphorus-based flame retardants such as the phosphinates and the condensed phosphoric acid esters disclosed in Patent Documents 1 to 10 are acidic compounds, when blended in a thermoplastic polyester resin, the acids act as a catalyst for cleaving the ester groups of the thermoplastic polyester resin during melt retention at a high temperature. Further, the epoxy groups of the biphenyl aralkyl type epoxy resin or the dicyclopentadiene type epoxy resin disclosed in Patent Document 11, which is a technique for improving the hydrolysis resistance of a thermoplastic polyester resin, are also ring-opened by the acid of a phosphorus-based flame retardant. Therefore, there is a problem that hydrolysis resistance is significantly deteriorated during high-temperature molding.

In addition, since the phosphazene compound which is the flame retardant referred to in Patent Documents 1 to 10 is a compound which has low flame retardancy but hardly generates an acidic component, in particular, Patent Document 1 has studied to improve hydrolysis resistance by controlling the blending ratio with a phosphorus-based flame retardant. However, when the amount of an epoxy compound is increased in order to improve hydrolysis resistance during high-temperature molding, flame retardancy may deteriorate due to the increase, and it is difficult to satisfy hydrolysis resistance during high-temperature molding while maintaining flame retardancy within the disclosed range of the blending ratio of the flame retardant. In addition, even when improvement in the hydrolysis resistance during high-temperature molding is attempted by controlling the ratio of the flame retardant, the characteristics of a molded article, namely, the low warpage property and the surface smoothness described later may not be obtained due to an amount of the epoxy compound out of a specific range.

Further, in addition to the problem regarding hydrolysis resistance during high-temperature molding for coping with downsizing and thinning of molded articles, the nfluence of dimensional deviation of products increases during assembly and use of the products as the molded articles are downsized and thinned, so that there is a demand for the low warpage property of the molded articles. However, with conventional materials, satisfactory characteristics have not been obtained with respect to the warpage of an injection molded article caused by residual internal stress of the molded article. In addition, when the size and thickness of the molded article are reduced, glass fibers as a reinforcing material are prone to lift up on the surface of the molded article and the surface smoothness is deteriorated, and deterioration of flame retardancy or deterioration of tracking resistance triggered thereby occurs. In addition, there is also a problem in appearance such as uneven coloring of the molded article due to lifting up of glass fibers.

In addition, along with the downsizing and thinning of products as described above, use of products in a form in which a resin member and a metal member are joined for space saving is increasing. In that case, for example, joint peeling between the resin and the metal or resin cracking may occur in a use environment in a cold district or the like, and accordingly, the resin composition may be required to have low-temperature impact resistance representing toughness in a low temperature range. Conventional materials do not have the required low-temperature impact resistance yet owing to brittleness in a low temperature range due to high rigidity.

As described above, in the techniques disclosed in Patent Documents 1 to 11, it is difficult to obtain a material that simultaneously satisfies all of flame retardancy and tracking resistance, inhibition of deterioration in hydrolysis resistance during high-temperature molding, and a low warpage property corresponding to downsizing and thinning of a molded article, superior surface smoothness, and low-temperature impact resistance.

An object of the present invention is to provide a thermoplastic polyester resin composition capable of affording a molded article superior in flame retardancy, tracking resistance, hydrolysis resistance during high-temperature molding, low warpage property, surface smoothness, and low-temperature impact resistance, and a molded article thereof.

### SOLUTIONS TO THE PROBLEMS

The present inventors have conducted intensive studies in order to solve the above-described problem, and as a result, have found that the above-described problem can be solved by blending 0.1 to 50 parts by weight of (B) at least one phosphinate selected from phosphinate salts and diphosphinate salts, more than 10 parts by weight and 40 parts by weight or less of (C) a phosphazene compound, 0.1 to 50 parts by weight of (D) a nitrogen-based flame retardant, 2.5 to 6.5 parts by weight of (E) an epoxy compound, and 0.1 to 20 parts by weight of at least one resin selected from (F-1) an olefin resin and (F-2) a polyamide resin in 100 parts by weight of (A) a thermoplastic polyester resin, and adjusting a total of the parts by weight of the component (B), the component (C), and the component (D) to a specific value, thereby attaining the present invention. That is, the present invention has the following constitutions.
[1] A thermoplastic polyester resin composition obtained by blending 0.1 to 50 parts by weight of (B) at least one phosphinate selected from phosphinate salts and diphosphinate salts, more than 10 parts by weight and 40 parts by weight or less of (C) a phosphazene compound, 0.1 to 50 parts by weight of (D) a nitrogen-based flame retardant, 2.5 to 6.5 parts by weight of (E) an epoxy compound, and 0.1 to 20 parts by weight of at least one resin selected from (F-1) an olefin resin and (F-2) a polyamide resin with 100 parts by weight of (A) a thermoplastic polyester resin, the thermoplastic polyester resin composition satisfying a requirement (i) below:
   (i) a total of the parts by weight of the (B) at least one phosphinate selected from phosphinate salts and diphosphinate salts, the parts by weight of the (C) phosphazene compound, and the parts by weight of the (D) nitrogen-based flame retardant is 60 to 80 parts by weight.
[2] The thermoplastic polyester resin composition according to [1], wherein the thermoplastic polyester resin composition satisfies a requirement (ii) below:
   (ii) a ratio of a total of the parts by weight of the (B) at least one phosphinate selected from phosphinate salts and diphosphinate salts, the parts by weight of the (C) phosphazene compound and the parts by weight of the (D) nitrogen-based flame retardant to the parts by weight of the (F-1) olefin resin ((the parts by weight of the component (B) relative to 100 parts by weight of the component (A)) + (the parts by weight of the component (C) relative to 100 parts by weight of the component (A)) + (the parts by weight of the component (D) relative to 100 parts by weight of the component (A))/(the parts by weight of the component (F-1) relative to 100 parts by weight of the component (A))) is 10 to 25.
[3] The thermoplastic polyester resin composition according to [1] or [2], wherein, when a total amount of the (B) at least one phosphinate selected from phosphinate salts and diphosphinate salts, the (C) phosphazene compound, and the (D) nitrogen-based flame retardant is regarded as 100 mass%, the (B) at least one phosphinate selected from phosphinate salts and diphosphinate salts accounts for 30 to 65 mass%, the (C) phosphazene compound accounts for 5 to 40 mass%, and the (D) nitrogen-based flame retardant accounts for 30 to 65 mass%.
[4] The thermoplastic polyester resin composition according to any one of [1] to [3], wherein the (E) epoxy compound includes at least (E-1) a novolac-type epoxy compound and (E-2) a monofunctional epoxy compound, and a ratio of blending amounts of the (E-1) novolac-type epoxy compound and the (E-2) monofunctional epoxy compound ((parts by weight of the component (E-1) relative to 100 parts by weight of the component (A))/(parts by weight of the component (E-2) relative to 100 parts by weight of the component (A))) is in a range of 0.5 to 2.0.
[5] A method for producing the thermoplastic polyester resin composition according to any one of [1] to [4], wherein melt kneading is performed using a twin-screw extruder having a ratio of Lk/D to L/D in a range of 12 to 22% where L (mm) is an overall length of a screw of the twin screw extruder, Lk (mm) is a length of a kneading part in the overall length of the screw, and D (mm) is a diameter of the screw.
[6] A molded article being obtained by melt-molding the thermoplastic polyester resin composition described in any one of [1] to [4].
[7] The molded article according to [6], wherein the molded article has a surface roughness Ra of 0.05 to 1.50 µm.

### EFFECTS OF THE INVENTION

The thermoplastic polyester resin composition of the present invention does not contain a halogen-based flame retardant such as a bromine-containing resin and can afford a molded article that is superior in flame retardancy and tracking resistance, and has superior hydrolysis resistance even during high-temperature molding, and is superior in low warpage property, surface smoothness, and low-temperature impact resistance.

### EMBODIMENTS OF THE INVENTION

Next, a thermoplastic polyester resin composition of the present invention will be described in detail.

The thermoplastic polyester resin composition of the present invention is a thermoplastic polyester resin composition obtained by blending 0.1 to 50 parts by weight of (B) at least one phosphinate selected from phosphinate salts and diphosphinate salts (hereinafter sometimes referred to as "(B) phosphinate"), more than 10 parts by weight and 40 parts by weight or less of (C) a phosphazene compound, 0.1 to 50 parts by weight of (D) a nitrogen-based flame retardant, 2.5 to 6.5 parts by weight of (E) an epoxy compound, and 0.1 to 20 parts by weight of at least one resin selected from (F-1) an olefin resin and (F-2) a polyamide resin (hereinafter sometimes referred to as "component (F)") with 100 parts by weight of (A) a thermoplastic polyester resin, the thermoplastic polyester resin composition satisfying the following requirement (i):
(i) a total of the parts by weight of the (B) phosphinate, the parts by weight of the (C) phosphazene compound, and the parts by weight of the (D) nitrogen-based flame retardant is 60 to 80 parts by weight.

In order to enhance the flame retardancy of the (A) thermoplastic polyester resin which has a low limiting oxygen index and burns when coming close to a fire source such as an open flame, the (B) phosphinate to be blended causes a decrease in hydrolysis resistance during high-temperature molding due to an acid component derived therefrom. On the other hand, the blending of the (E) epoxy compound for solving the problem may deteriorate the flame retardancy. Therefore, it is possible to achieve both flame retardancy and hydrolysis resistance during high-temperature molding, and achieve superior tracking resistance, low warpage property, surface smoothness, and low-temperature impact resistance by blending a specific amount of the (E) epoxy compound and employing a total amount controlled within a specific range of the flame retardants including the (C) phosphazene compound and the (D) nitrogen-based flame retardant, which are flame retardants having little influence on deterioration of hydrolysis resistance during high-temperature molding.

Here, the thermoplastic polyester resin composition of the present invention contains products of reactions of each of the component (A), the component (B), the component (C), the component (D), the component (E), and the component (F) with other components. The reaction products are each produced via a complicated reaction, and accordingly, it is not practical to specify their structure. Thus, in the present invention, the invention is sometimes specified by the blended components.

The (A) thermoplastic polyester resin to be used in the present invention is a polymer or copolymer having, as a main structural unit, at least one residue selected from the group consisting of (1) a dicarboxylic acid or an ester-forming derivative thereof and a diol or an ester-forming derivative thereof, (2) a hydroxycarboxylic acid or an ester-forming derivative thereof, and (3) a lactone. Here, the expression "as a main structural unit" refers to having 50 mol% or more of at least one residue selected from the group consisting of (1) to (3) in all the structural units, and it is a preferred aspect that these residues are present in an amount of 80 mol% or more. Among these, a polymer or copolymer having a residue of (1) a dicarboxylic acid or an ester-forming derivative thereof and a diol or an ester-forming derivative thereof as a main structural unit is preferred from the viewpoint of further superior mechanical properties and heat resistance.

Examples of the dicarboxylic acid or the ester-forming derivative thereof include aromatic dicarboxylic acids such as terephthalic acid, isophthalic acid, phthalic acid, 2,6-naphthalenedicarboxylic acid, 1,5-naphthalenedicarboxylic acid, bis(p-carboxyphenyl)methane, anthracene dicarboxylic acid, 4,4'-diphenyl ether dicarboxylic acid, 5-tetrabutylphosphonium isophthalic acid, and 5-sodium sulfoisophthalic acid, aliphatic dicarboxylic acids such as oxalic acid, succinic acid, adipic acid, sebacic acid, azelaic acid, dodecanedionic acid, malonic acid, glutaric acid, and dimer acid, alicyclic dicarboxylic acids such as 1,3-cyclohexanedicarboxylic acid and 1,4-cyclohexanedicarboxylic acid, and ester-forming derivatives thereof. Two or more of these may be used.

Examples of the diol or the ester-forming derivative thereof include aliphatic or alicyclic glycols having 2 to 20 carbon atoms such as ethylene glycol, propylene glycol, 1,4-butanediol, neopentyl glycol, 1,5-pentanediol, 1,6-hexanediol, decamethylene glycol, cyclohexanedimethanol, cyclohexanediol, and dimer diol, long-chain glycols having a molecular weight of 200 to 100,000 such as polyethylene glycol, poly-1,3-propylene glycol, and polytetramethylene glycol, and aromatic dioxy compounds and ester-forming derivatives thereof such as 4,4'-dihydroxybiphenyl, hydroquinone, t-butylhydroquinone, bisphenol A, bisphenol S, and bisphenol F. Two or more of these may be used.

Examples of the polymer or copolymer having a dicarboxylic acid or an ester-forming derivative thereof and a diol or an ester-forming derivative thereof as a structural unit include aromatic polyester resins such as polyethylene terephthalate, polypropylene terephthalate, polybutylene terephthalate, polypropylene isophthalate, polybutylene isophthalate, polybutylene naphthalate, polypropylene isophthalate/terephthalate, polybutylene isophthalate/terephthalate, polypropylene terephthalate/naphthalate, polybutylene terephthalate/naphthalate, polybutylene terephthalate/decane dicarboxylate, polypropylene terephthalate/sodium 5-sulfoisophthalate, polybutylene terephthalate/sodium 5-sulfoisophthalate, polypropylene terephthalate/polyethylene glycol, polybutylene terephthalate/polyethylene glycol, polypropylene terephthalate/polytetramethylene glycol, polybutylene terephthalate/polytetramethylene glycol, polypropylene terephthalate/isophthalate/polytetramethylene glycol, polybutylene terephthalate/isophthalate/polytetramethylene glycol, polybutylene terephthalate/succinate, polypropylene terephthalate/adipate, polybutylene terephthalate/adipate, polypropylene terephthalate/sebacate, polybutylene terephthalate/sebacate, polypropylene terephthalate/isophthalate/adipate, polybutylene terephthalate/isophthalate/succinate, polybutylene terephthalate/isophthalate/adipate, and polybutylene terephthalate/isophthalate/sebacate. Here, "/" represents a copolymer.

Among these, a polymer or copolymer having a residue of a dicarboxylic acid or an ester-forming derivative thereof and a residue of an aliphatic diol or an ester-forming derivative thereof as main structural units is more preferable from the viewpoint of further improving mechanical properties and heat resistance. A polymer or copolymer having a residue of terephthalic acid, naphthalenedicarboxylic acid or an ester-forming derivative thereof and a residue of an aliphatic diol selected from propylene glycol and 1,4-butanediol or an ester-forming derivative thereof as main structural units is further preferable.

Among them, aromatic polyester resins such as polyethylene terephthalate, polypropylene terephthalate, polybutylene terephthalate, polypropylene naphthalate, polybutylene naphthalate, polypropylene isophthalate/terephthalate, polybutylene isophthalate/terephthalate, polypropylene terephthalate/naphthalate, and polybutylene terephthalate/naphthalate are particularly preferable, and polyethylene terephthalate, polypropylene terephthalate, and polybutylene naphthalate are further preferable. A polybutylene terephthalate resin is more preferable from the viewpoint of being excellent in moldability and crystallinity. Two or more kinds of these can also be used in an arbitrary content.

In the present invention, the ratio of terephthalic acid or an ester-forming derivative thereof to all dicarboxylic acids constituting the polymer or copolymer having a residue of a dicarboxylic acid or an ester-forming derivative thereof and a residue of a diol or an ester-forming derivative thereof as main structural units is preferably 30 mol% or more, and more preferably 40 mol% or more.

In the present invention, as the (A) thermoplastic polyester resin, a liquid crystalline polyester resin capable of forming anisotropy during melting can be used. Examples of the structural unit of the liquid crystalline polyester resin include an aromatic oxycarbonyl unit, an aromatic dioxy unit, an aromatic and/or aliphatic dicarbonyl unit, an alkylenedioxy unit, and an aromatic iminooxy unit.

The carboxyl group amount in the (A) thermoplastic polyester resin used in the present invention is preferably 50 eq/t or less from the viewpoint of fluidity, hydrolysis resistance, and heat resistance. When the carboxyl group amount exceeds 50 eq/t, the carboxyl group acts as an acid catalyst, so that hydrolysis resistance may significantly deteriorate. The carboxyl group amount is more preferably 40 eq/t or less and further preferably 30 eq/t or less. The lower limit value of the carboxyl group amount is 0 eq/t. Here, the carboxyl group amount in the (A) thermoplastic polyester resin is a value measured by dissolving the (A) thermoplastic polyester resin in an o-cresol/chloroform solvent, and then titrating the resulting solution with ethanolic potassium hydroxide.

The (A) thermoplastic polyester resin used in the present invention preferably has a weight average molecular weight (Mw) of 8,000 or more, from the viewpoint of further improving mechanical properties. Preferably, the weight average molecular weight (Mw) is 500,000 or less because fluidity can be improved. The weight average molecular weight is more preferably 300,000 or less and further preferably 250,000 or less. In the present invention, Mw of the (A) thermoplastic polyester resin is a value in terms of polymethyl methacrylate (PMMA) measured by gel permeation chromatography (GPC) using hexafluoroisopropanol as a solvent.

The (A) thermoplastic polyester resin used in the present invention can be produced by a polycondensation method, a ring-opening polymerization method, or the like, which is well known. The production method may be performed by either batch polymerization or continuous polymerization, and either a transesterification reaction or a reaction by direct polymerization may be employed. From the viewpoint of productivity, continuous polymerization is preferable, and direct polymerization is more preferably used. In order to effectively advance the esterification reaction or transesterification reaction and the polycondensation reaction, it is preferable to add a polymerization reaction catalyst during these reactions.

In the thermoplastic polyester resin composition of the present invention, the (B) at least one phosphinate selected from phosphinate salts and diphosphinate salts is blended in order to improve flame retardancy. The (B) phosphinate promotes the formation of the carbonized layer of the (A) thermoplastic polyester resin and can further improve flame retardancy.

The phosphinate salt in the present invention is a compound having a structure represented by Formula (1) below. 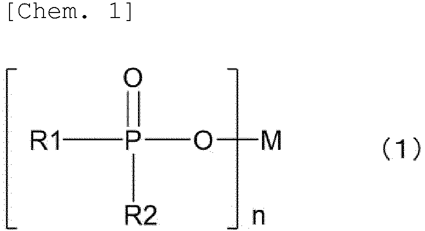 wherein R1 and R2 in the formula may be either the same or different, and each represent a hydrogen atom, an alkyl group having 1 to 16 carbon atoms, or an aryl group, and may be either linear or branched; M is sodium, magnesium, nickel, manganese, calcium, aluminum, or zinc; and n is an integer of 1 to 4.

The diphosphinate salt in the present invention is a compound having a structure represented by Formula (2) below. 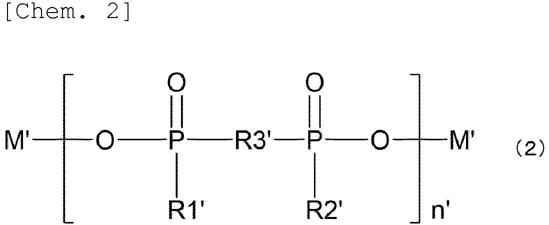 wherein R1' and R2' may be either the same or different, and each represent a hydrogen atom, an alkyl group having 1 to 16 carbon atoms, or an aryl group, and may be either linear or branched; R3' is a linear or branched alkylene group having 1 to 10 carbon atoms, an arylene group having 6 to 10 carbon atoms, an alkylarylene group, or an arylalkylene group; M' is sodium, magnesium, nickel, manganese, calcium, aluminum, or zinc; and n' is an integer of 1 to 4.

In the present invention, as the (B) phosphinate, a polymer of a phosphinate salt or a polymer of a diphosphinate salt can also be used. Examples of the compound include structures described in Japanese Translation of PCT International Application Publication No. 2002-540224.

Aluminum is preferable as the metal component from the viewpoint of being superior in flame retardancy and the like. Specifically, aluminum hypophosphite, aluminum ethylmethylphosphinate, or aluminum diethylphosphinate is preferable, and aluminum diethylphosphinate is more preferable. Examples of commercially available products of the metal salt of phosphinic acid include aluminum hypophosphite "Phoslite" (registered trademark) IP-A manufactured by Italmatch Chemicals S.p.A and "Exolit" (registered trademark) OP1230 and OP1240 manufactured by Clariant Japan K.K.

The blending amount of the (B) phosphinate in the present invention is 0.1 to 50 parts by weight with respect to 100 parts by weight of the (A) thermoplastic polyester resin, from the viewpoint of flame retardancy and hydrolysis resistance during high-temperature molding. When the blending amount of the component (B) is less than 0.1 parts by weight, flame retardancy deteriorates. The blending amount thereof is more preferably 1 part by weight or more, further preferably 10 parts by weight or more, and most preferably 18 parts by weight or more. On the other hand, when the blending amount of the component (B) exceeds 50 parts by weight, hydrolysis resistance during high-temperature molding deteriorates. The blending amount thereof is more preferably 40 parts by weight or less and further preferably 30 parts by weight or less.

In the thermoplastic polyester resin composition of the present invention, the (C) phosphazene compound is blended in order to improve flame retardancy, tracking resistance, hydrolysis resistance during high-temperature molding, low warpage property, and surface smoothness.

The (C) phosphazene compound in the present invention may be a compound having a -P=N- bond in the molecule, and examples thereof include a chain or cyclic phosphazene compound having a structure represented by General Formula (3) below. 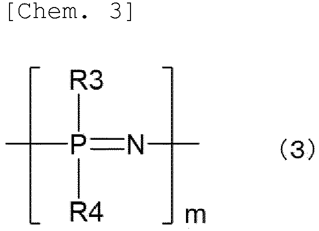 in General Formula (3) above, m represents an integer of 1 to 1000, and R3 and R4 each independently represent a hydrogen atom, a linear, branched or cyclic alkyl group having 1 or more and 18 or less carbon atoms, a linear, branched or cyclic alkoxyl group having 1 or more and 30 or less carbon atoms, an aryl group having 6 or more and 30 or less carbon atoms, or am aryloxy group having 6 or more and 30 or less carbon atoms.

In General Formula (3) above, examples of the alkyl group includes a methyl group and an ethyl group. Examples of the alkoxyl group include a methoxy group and an ethoxy group. Examples of the aryl group include a phenyl group. Examples of the aryloxy group include a phenyloxy group. m is preferably 3 to 30, and it is preferable to include at least a cyclic phosphazene compound in which the structure represented by General Formula (3) above is cyclically bonded.

The (C) phosphazene compound may be a crosslinked phosphazene compound. Such a crosslinked phosphazene compound can be obtained, for example, by crosslinking a chain or cyclic phosphazene compound represented by General Formula (3) above via a divalent crosslinking group, and examples thereof include a phosphazene compound having a structure represented by General Formula (4) below. 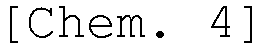 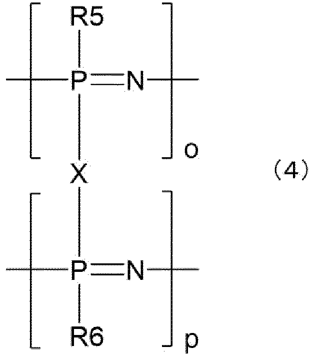 in General Formula (4) above, o and p represent an integer of 1 to 1000; R5 and R6 each independently represent a hydrogen atom, a linear, branched or cyclic alkyl group having 1 or more and 18 or less carbon atoms, a linear, branched or cyclic alkoxyl group having 1 or more and 30 or less carbon atoms, an aryl group having 6 or more and 30 or less carbon atoms, or am aryloxy group having 6 or more and 30 or less carbon atoms; and X represents a divalent crosslinking group.

In General Formula (4) above, examples of the alkyl group includes a methyl group and an ethyl group. Examples of the alkoxyl group include a methoxy group and an ethoxy group. Examples of the aryl group include a phenyl group. Examples of the aryloxy group include a phenyloxy group.

In General Formula (4) above, X represents a divalent crosslinking group, and examples of the crosslinking group include a dialkoxybenzene group represented by the structure of -O-C₆H₄-O- (o-dialkoxybenzene group, m-dialkoxybenzene group, or p-dialkoxybenzene group), and a bisphenylene group represented by the following General Formula (5). The divalent crosslinking group can be used singly or in combination of two or more types thereof. The crosslinked phosphazene compound can be obtained by the method described in Japanese Patent Laid-open Publication No. 2003-192792 or other known methods. 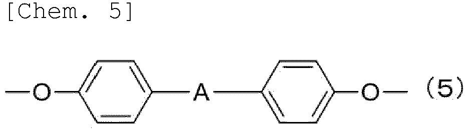 in General Formula (5), A represents a direct bond, - C(CH₃)₂-, -SO₂-, -S-, or -O-.

As the (C) phosphazene compound, a synthesized product may be used, and a commercially available product can also be used. The phosphazene compound can be synthesized by known methods described in "Synthesis and Application of Phosphazene Compounds" (Naoyuki Kajihara, CMC Publishing Co., Ltd., 1986) and the like. For example, it can be synthesized by reacting phosphorus pentachloride or phosphorus trichloride as a phosphorus source and ammonium chloride or ammonia gas as a nitrogen source by a known method, or purifying a cyclic product obtained therefrom and substituting the obtained substance with an alcohol, a phenol, and an amine. As a commercially available product, "Rabitle" (registered trademark) FP-110 manufactured by FUSHIMI Pharmaceutical Co., Ltd. and the like are preferably used.

The blending amount of the (C) phosphazene compound in the present invention is more than 10 parts by weight and 40 parts by weight or less with respect to 100 parts by weight of the (A) thermoplastic polyester resin from the viewpoint of the balance among flame retardancy, hydrolysis resistance during high-temperature molding, low warpage property, and surface smoothness. When the blending amount of the component (C) is 10 parts by weight or less, flame retardancy and hydrolysis resistance during high-temperature molding are deteriorated, and low warpage property and surface smoothness are deteriorated due to deterioration of fluidity during melt-molding. The blending amount is more preferably 11 parts by weight or more, and further preferably 12 parts by weight or more. On the other hand, when the blending amount of the component (C) is more than 40 parts by weight, the flame retardant effect is inferior to that of other flame retardants, so that the flame retardancy deteriorates and the low-temperature impact resistance deteriorates. The blending amount is more preferably 35 parts by weight or less, and further preferably 20 parts by weight or less.

In the thermoplastic polyester resin composition of the present invention, the (D) nitrogen-based flame retardant is further blended in order to improve flame retardancy and tracking resistance. Examples of the (D) nitrogen-based flame retardant in the present invention include an aliphatic amine compound, an aromatic amine compound, a nitrogen-containing heterocyclic compound, a cyan compound, an aliphatic amide compound, an aromatic amide compound, urea, and thiourea. Two or more of these may be blended. Among these, a nitrogen-containing heterocyclic compound is preferably used. At this time, in the case of a flame retardant containing both a nitrogen atom and a phosphorus atom, when the flame retardant has a -P=N- bond in the molecule, the flame retardant is regarded as the (C) phosphazene compound, and when the flame retardant does not have such a bond, the flame retardant is regarded as a nitrogen-based flame retardant.

Examples of the aliphatic amine compound include ethylamine, butylamine, diethylamine, ethylenediamine, butylenediamine, triethylenetetramine, 1,2-diaminocyclohexane, and 1,2-diaminocyclooctane.

Examples of the aromatic amine compound include aniline and phenylenediamine.

Examples of the nitrogen-containing heterocyclic compound include uric acid, adenine, guanine, 2,6-diaminopurine, 2,4,6-triaminopyridine, and a triazine compound.

Examples of the cyan compound include dicyandiamide.

Examples of the aliphatic amide compound and the aromatic amide compound include N,N-dimethylacetamide and N,N-diphenylacetamide.

The triazine compound exemplified in the nitrogen-containing heterocyclic compound is a compound having a triazine skeleton. Examples thereof include triazine, melamine, benzoguanamine, methylguanamine, cyanuric acid, melamine cyanurate, melamine isocyanurate, trimethyltriazine, triphenyltriazine, amelin, amelide, thiocyanurate, diaminomercaptotriazine, diaminomethyltriazine, diaminophenyltriazine, diaminoisopropoxytriazine and melamine polyphosphate. Melamine cyanurate, melamine isocyanurate, and melamine polyphosphate are preferably used.

As the melamine cyanurate or melamine isocyanurate, an adduct of cyanuric acid or isocyanuric acid with a triazine compound is preferred, and examples thereof include an adduct having a composition of usually 1 : 1 (molar ratio) or optionally 1 : 2 (molar ratio). These are produced by a known method, and for example, a mixture of melamine and cyanuric acid or isocyanuric acid is formed into a water slurry, the water slurry is thoroughly mixed to form their salt in the form of fine particles, and this slurry was filtered and dried to provide the final product normally in the form of powder. The salt may not be entirely pure, but may contain a small amount of unreacted melamine and residual cyanuric acid or isocyanuric acid. If a sufficiently high dispersibility is not achieved, a dispersing agent such as tris-(β-hydroxyethyl)isocyanurate or a known surface treatment agent such as polyvinyl alcohol and a metal oxide such as silica may be used in combination. The average particle diameters before and after being blended with the resin of melamine cyanurate or melamine isocyanurate are preferably 0.1 to 100 µm from the viewpoint of the flame retardancy, a mechanical strength, and surface property of a molded article. Here, the average particle diameter is an average particle diameter with 50% cumulative distribution measured by a laser micron sizer method. As a commercially available product of melamine cyanurate or melamine isocyanurate, MC-4000, MC-4500, MC-6000, and the like manufactured by Nissan Chemical Corporation are preferably used.

The blending amount of the (D) nitrogen-based flame retardant is 0.1 to 50 parts by weight with respect to 100 parts by weight of the (A) thermoplastic polyester resin, from the viewpoint of the balance between flame retardancy and mechanical properties. When the blending amount of the component (D) is less than 0.1 parts by weight, flame retardancy is insufficient. The blending amount is more preferably 1 part by weight or more, further preferably 10 parts by weight or more, and most preferably 15 parts by weight or more. On the other hand, when the blending amount of the component (D) exceeds 50 parts by weight, mechanical properties and low-temperature impact resistance deteriorate. The blending amount is more preferably 40 parts by weight or less and further preferably 30 parts by weight or less.

In the thermoplastic polyester resin composition of the present invention, the (E) epoxy compound is further blended in order to improve hydrolysis resistance. By blending the (E) epoxy compound, the carboxyl group of the (A) thermoplastic polyester resin is reaction-blocked, and the hydrolysis reaction in a hot humid environment can be inhibited.

The (E) epoxy compound to be used in the present invention is preferably a polyfunctional epoxy compound. The polyfunctional epoxy compound is a compound having two or more epoxy groups in one molecule and containing no bromine atom. The polyfunctional epoxy compound is not particularly limited, and examples thereof include a glycidyl ester compound, a glycidyl ether compound, an epoxidized fatty acid ester compound, a glycidyl imide compound, and an alicyclic epoxy compound. These may be used in combination of two or more kinds thereof.

The glycidyl ester compound is a compound having a glycidyl ester structure, and examples thereof include diglycidyl terephthalate, diglycidyl isophthalate, diglycidyl phthalate, diglycidyl naphthalenedicarboxylate, diglycidyl methylterephthalate, diglycidyl hexahydrophthalate, diglycidyl tetrahydrophthalate, diglycidyl cyclohexanedicarboxylate, diglycidyl adipate, diglycidyl succinate, diglycidyl sebacate, diglycidyl dodecanedionate, diglycidyl octadecanedicarboxylate, triglycidyl trimellitate, and tetraglycidyl pyromellitate.

The glycidyl ether compound is a compound having a glycidyl ether structure, and examples thereof include a condensate of a phenol compound and epichlorohydrin, novolac-type epoxy, and a glycidyl ether of a polyvalent hydroxy group compound.

Examples of the condensate of a phenol compound and epichlorohydrin include condensates obtained by condensation of epichlorohydrin with phenol compounds such as bisphenol A, resorcinol, hydroquinone, pyrocatechol, bisphenol F, saligenin, bisphenol S, 4,4'-dihydroxybiphenyl, 1,5-dihydroxynaphthalene, 1,4-dihydroanthracene-9,10-diol, 6-hydroxy-2-naphthoic acid, 1,1-methylenebis-2,7-dihydroxynaphthalene, 1,1,2,2-tetrakis-4-hydroxyphenylethane, and cashew phenol.

Examples of the novolac-type epoxy include phenol novolac-type epoxy, cresol novolac-type epoxy, naphthol novolac-type epoxy, bisphenol A novolac-type epoxy, dicyclopentadiene-phenol-added novolac-type epoxy, dimethylenephenylene-phenol-added novolac-type epoxy, and dimethylenebiphenylene-phenol-added novolac-type epoxy.

In the present invention, the polyvalent hydroxy group compound is an aliphatic compound having two or more hydroxy groups, and specific examples thereof include glycol having 2 to 20 carbon atoms, glycerin, polyglycerin, dipentaerythritol, tripentaerythritol, xylitol, mannitol, sorbitol, galactose, maltitol, lactitol, isomalt, inositol, glucose, and fructose.

In the present invention, the epoxidized fatty acid ester compound is a compound obtained by epoxidizing an unsaturated bond of an unsaturated fatty acid ester such as soybean oil or linseed oil, and specific examples thereof include epoxidized fatty acid octyl ester, epoxidized soybean oil, and epoxidized linseed oil.

Examples of the glycidyl imide compound include N-glycidyl phthalimide, N-glycidyl-4-methylphthalimide, N-glycidyl-4,5-dimethylphthalimide, N-glycidyl-3-methylphthalimide, N-glycidyl-3,6-dimethylphthalimide, N-glycidyl-4-ethoxyphthalimide, N-glycidyl-4-chlorophthalimide, N-glycidyl-4,5-dichlorophthalimide, N-glycidyl-3,4,5,6-tetrabromophthalimide, N-glycidyl-4-n-butyl-5-bromophthalimide, N-glycidyl succinimide, N-glycidyl hexahydrophthalimide, N-glycidyl-1,2,3,6-tetrahydrophthalimide, N-glycidyl maleinimide, N-glycidyl-α,β-dimethylsuccinimide, N-glycidyl-α-ethylsuccinimide, N-glycidyl-α-propylsuccinimide, triglycidyl isocyanurate, N-glycidylbenzamide, N-glycidyl-p-methylbenzamide, N-glycidylnaphthamide, and N-glycidylsteramide.

Examples of the alicyclic epoxy compound include 3,4-epoxycyclohexylmethyl-3,4-epoxycyclohexylcarboxylate, bis(3,4-epoxycyclohexylmethyl)adipate, vinylcyclohexene diepoxide, N-methyl-4,5-epoxycyclohexane-1,2-dicarboxylic acid imide, N-ethyl-4,5-epoxycyclohexane-1,2-dicarboxylic acid imide, N-phenyl-4,5-epoxycyclohexane-1,2-dicarboxylic acid imide, N-naphthyl-4,5-epoxycyclohexane-1,2-dicarboxylic acid imide, and N-tolyl-3-methyl-4,5-epoxycyclohexane-1,2-dicarboxylic acid imide.

The (E) epoxy compound to be used in the present invention is preferably (E-1) a novolac-type epoxy compound among those recited above. When the (E) epoxy compound is the (E-1) novolac-type epoxy compound, a reaction between epoxy groups can be inhibited, resulting in superior hydrolysis resistance, and heat resistance can be improved. Particularly, dicyclopentadiene-phenol-added novolac-type epoxy is preferable.

As the (E) epoxy compound to be used in the present invention, (E-2) a monofunctional epoxy compound is preferably further blended. In general, the (E-2) monofunctional epoxy compound, which generally has less steric hindrance around the epoxy group, can more efficiently reaction-block a carboxyl group of the (A) thermoplastic polyester resin, and particularly can inhibit a hydrolysis reaction during high-temperature molding by being used in combination with the (E-1) novolac-type epoxy compound. Furthermore, by using the (E-2) monofunctional epoxy compound in combination, fluidity during melt-molding is improved, and a molded article superior in low warpage property and surface smoothness can be obtained. The (E-2) monofunctional epoxy compound is not particularly limited as long as it is a compound having only one epoxy group, but a monofunctional glycidyl ether compound, a monofunctional glycidyl ester compound, and the like are preferable.

Examples of the glycidyl ether compound having only one epoxy group include glycidyl ethers of monohydric alcohols and phenols each having only one hydroxy group. Examples of the glycidyl ethers of monohydric alcohols include butyl glycidyl ether, stearyl glycidyl ether, allyl glycidyl ether, ethylene oxide lauryl alcohol glycidyl ether, and ethylene oxide phenol glycidyl ether. Examples of the glycidyl ethers of monohydric phenols include phenyl glycidyl ether and o-phenyl glycidyl ether. Two or more of these may be used.

Examples of the glycidyl ester compound having only one epoxy group include glycidyl esters of saturated aliphatic monocarboxylic acids, glycidyl esters of unsaturated aliphatic monocarboxylic acids, and glycidyl esters of aromatic monocarboxylic acids. Examples of the glycidyl esters of saturated aliphatic monocarboxylic acids include glycidyl ester of cyclohexanecarboxylic acid, glycidyl ester of stearic acid, glycidyl ester of lauric acid, glycidyl ester of palmitic acid, and glycidyl ester of Versatic acid. Examples of the glycidyl esters of unsaturated aliphatic monocarboxylic acids include glycidyl ester of oleic acid, glycidyl ester of linoleic acid, and glycidyl ester of linolenic acid. Examples of the glycidyl esters of aromatic monocarboxylic acids include glycidyl ester of 4-t-butylbenzoic acid and glycidyl ester of p-toluic acid. Two or more of these may be used.

Among them, from the viewpoint of reactivity with the carboxyl end group of the (A) thermoplastic polyester resin, a glycidyl ester compound of a saturated aliphatic monocarboxylic acid and/or a glycidyl ester of an aromatic monocarboxylic acid is preferable, and glycidyl ester of 4-t-butylbenzoic acid or glycidyl ester of Versatic acid is more preferable.

The (E) epoxy compound is preferably an epoxy compound having an epoxy equivalent of 100 to 3000 g/eq. When the epoxy equivalent of the (E) epoxy compound is 100 g/eq or more, the amount of gas during melt processing can be suppressed. The epoxy equivalent is further preferably 150 g/eq or more. When the epoxy equivalent of the epoxy compound (E) is 3000 g/eq or less, superior hydrolysis resistance during high-temperature molding is obtained. The epoxy equivalent is further preferably 2000 g/eq or less.

In the present invention, the blending amount of the (E) epoxy compound is 2.5 to 6.5 parts by weight with respect to 100 parts by weight of the (A) thermoplastic polyester resin. When the blending amount of the component (E) is less than 2.5 parts by weight, the effect of improving hydrolysis resistance during high-temperature molding, tracking resistance, low warpage property, and surface smoothness cannot be obtained. The blending amount is more preferably 3.0 parts by weight or more, and further preferably 3.2 parts by weight or more. On the other hand, when the blending amount of the component (E) exceeds 6.5 parts by weight, flame retardancy, low warpage property, surface smoothness, and low-temperature impact resistance tend to deteriorate. The blending amount is more preferably 6.0 parts by weight or less, and further preferably 5.0 parts by weight or less.

In the present invention, the blending amount of the (E-1) novolac-type epoxy compound is preferably 1.5 to 4.0 parts by weight with respect to 100 parts by weight of the (A) thermoplastic polyester resin. It is preferable that the blending amount of the (E-1) component is 1.5 parts by weight or more because the resulting composition is superior in hydrolysis resistance during high-temperature molding. The blending amount is more preferably 1.7 parts by weight. On the other hand, it is preferable that the blending amount of the component (E-1) is 4.0 parts by weight or less because a molded article superior in low warpage property, surface smoothness, and low-temperature impact resistance can be obtained. The blending amount is more preferably 3.0 parts by weight or less.

In the present invention, the blending amount of the (E-2) monofunctional epoxy compound is 0.5 to 3.0 parts by weight with respect to 100 parts by weight of the (A) thermoplastic polyester resin. It is preferable that the blending amount of the component (E-2) is 0.5 parts by weight or more because the resulting composition is superior in hydrolysis resistance during high-temperature molding, low warpage property, and surface smoothness. The blending amount is more preferably 1.0 parts by weight. On the other hand, it is preferable that the blending amount of the component (E-2) is 3.0 parts by weight or less because the resulting composition is superior in flame retardancy. The blending amount is more preferably 2.0 parts by weight or less.

In the present invention, the ratio of the blending amounts of the (E-1) novolac-type epoxy compound and the (E-2) monofunctional epoxy compound ((parts by weight of the component (E-1) relative to 100 parts by weight of the component (A))/(parts by weight of the component (E-2) relative to 100 parts by weight of the component (A))) is preferably in the range of 0.5 to 2.0. It is preferable that the ratio of the blending amounts of the component (E-1) and the component (E-2) is within the above range because the resulting thermoplastic polyester resin composition is superior in flame retardancy, hydrolysis resistance during high-temperature molding, low warpage property, surface smoothness, and low-temperature impact resistance. The ratio is more preferably 0.8 or more. On the other hand, the ratio is more preferably 1.5 or less.

In the thermoplastic polyester resin composition of the present invention, at least one resin selected from (F-1) an olefin resin and (F-2) a polyamide resin is further blended in order to improve tracking resistance.

The (F-1) olefin resin for use in the present invention is a thermoplastic resin obtained by polymerizing or copolymerizing olefins such as ethylene, propylene, butene, isoprene, and pentene, and examples thereof include homopolymers such as polyethylene, polypropylene, polystyrene, poly 1-butene, poly 1-pentene, and polymethylpentene, ethylene/propylene copolymers, ethylene/propylene/non-conjugated diene copolymers, ethylene-butene-1 copolymers, ethylene/glycidyl methacrylate copolymers, ethylene/butene-1/glycidyl methacrylate copolymers, ethylene/propylene/glycidyl methacrylate copolymers, ethylene/octene-1/glycidyl methacrylate copolymers, ethylene/acrylic acid ester/glycidyl methacrylate copolymers, ethylene/maleic anhydride copolymers, ethylene/butene-1/maleic anhydride copolymers, ethylene/propylene/maleic anhydride copolymers, and ethylene/acrylic acid ester/maleic anhydride copolymers. At this time, in the case of an olefin resin modified with a glycidyl group, this is handled as not the (E) epoxy compound but the (F-1) olefin resin. These (F-1) olefin resins may be used singly or in combination of two or more types thereof.

The (F-1) olefin resin preferably includes at least an olefin resin modified with an acid because this is superior in dispersibility in the (A) thermoplastic polyester resin and is superior in hydrolysis resistance during high-temperature molding and toughness. The olefin resin modified with an acid refers to a modified olefin resin having an acidic substrate introduced into the main chain or a side chain. Examples thereof include an ethylene/maleic anhydride copolymer, an ethylene/butene-1/maleic anhydride copolymer, an ethylene/propylene/maleic anhydride copolymer, and an ethylene/acrylic acid ester/maleic anhydride copolymer. Among these, from the viewpoint of superior dispersibility in the (A) thermoplastic polyester resin, flame retardancy, and hydrolysis resistance during high-temperature molding, it is preferable to contain at least an ethylene/butene-1/maleic anhydride copolymer.

Examples of the (F-2) polyamide resin for use in the present invention include a polyamide resin obtained via polymerization of a lactam having a three or more membered ring, a polymerizable amino acid, a diamine and a dibasic acid, or a mixture thereof. The (F-2) polyamide resin can improve the tracking resistance of the thermoplastic polyester resin composition similarly to the (F-1) polyolefin resin, but the influence on decrease in flame retardancy due to the formulation is small. Therefore, flame retardancy, tracking resistance, and hydrolysis resistance during high-temperature molding can be well balanced at a higher level by blending the (F-2) polyamide resin.

Examples of the polyamide resin include nylon 6, nylon 46, nylon 66, nylon 11, nylon 12, nylon 610, nylon 612, nylon 6/66 copolymer, nylon 6/612, nylon MXD (m-xylylenediamine) 6, nylon 9T, nylon 10T, nylon 6T/66 copolymer, nylon 6T/6I copolymer, nylon 6T/M5T copolymer, nylon 6T/12 copolymer, nylon 66/6T/6I copolymer, nylon 6T/6 copolymer, nylon 66/6I copolymer, and nylon 66/6I/6 copolymer. Two or more of these polymerizable compounds may be contained. In particular, nylon 610, which is superior in balance between tracking resistance and flame retardancy, is preferable.

In the present invention, the blending amount of the at least one resin selected from the (F-1) olefin resin and the (F-2) polyamide resin is 0.1 to 20 parts by weight in total with respect to 100 parts by weight of the (A) thermoplastic polyester resin. In this range, it is possible to improve hydrolysis resistance during high-temperature molding and tracking resistance while securing flame retardancy. When the blending amount is less than 0.1 parts by weight, an effect of improving tracking resistance cannot be obtained. The blending amount is more preferably 2 parts by weight or more, and further preferably 3 parts by weight or more. On the other hand, when the blending amount exceeds 20 parts by weight, flame retardancy and mechanical properties tend to deteriorate. The blending amount is preferably 15 parts by weight or less, and more preferably 10 parts by weight or less. From the viewpoint of tracking resistance, it is preferable that the amount of the (F-1) olefin resin is more than 0 parts by weight, in other words, the (F-1) olefin resin is blended.

In the present invention, the blending amount of the (F-1) olefin resin is preferably 2 to 15 parts by weight with respect to 100 parts by weight of the (A) thermoplastic polyester resin. From the viewpoint of tracking resistance and low-temperature impact resistance, the blending amount is more preferably 3 parts by weight or more. On the other hand, the blending amount is more preferably 10 parts by weight or less from the viewpoint of flame retardancy and mechanical properties.

In the present invention, the blending amount of the (F-2) polyamide resin is preferably 3 to 18 parts by weight with respect to 100 parts by weight of the (A) thermoplastic polyester resin. From the viewpoint of flame retardancy, tracking resistance and low-temperature impact resistance, the blending amount is more preferably 5 parts by weight or more. On the other hand, the blending amount is more preferably 12 parts by weight or less from the viewpoint of mechanical properties.

In the present invention, the total of the parts by weight of the (B) phosphinate, the parts by weight of the (C) phosphazene compound, and the nitrogen-based flame retardant (D) ((the parts by weight of the component (B) relative to 100 parts by weight of the component (A)) + (the parts by weight of the component (C) relative to 100 parts by weight of component (A)) + (the parts by weight of the component (D) relative to 100 parts by weight of the component (A))) is 60 to 80 parts by weight. Blending of the (E) epoxy compound for improving hydrolysis resistance during high-temperature molding causes decrease in flame retardancy, but controlling the total amount of the components (B), (C), and (D), which are flame retardant components, within the above range makes it possible to improve hydrolysis resistance during high-temperature molding without impairing flame retardancy. The total of the parts by weight of the (B) phosphinate, the parts by weight of the (C) phosphazene compound, and the (D) nitrogen-based flame retardant is preferably 62 parts by weight or more, and more preferably 65 parts by weight or more. The total is preferably 75 parts by weight or less, and more preferably 70 parts by weight or less.

In the thermoplastic polyester resin composition of the present invention, it is preferable that the ratio of the total of the parts by weight of the (B) phosphinate, the parts by weight of the (C) phosphazene compound and the (D) nitrogen-based flame retardant to the parts by weight of the (F-1) olefin resin (((the parts by weight of the component (B) relative to 100 parts by weight of the component (A)) + (the parts by weight of the component (C) relative to 100 parts by weight of the component (A)) + (the parts by weight of the component (D) relative to 100 parts by weight of the component (A)))/(the parts by weight of the component (F-1) relative to 100 parts by weight of the component (A))) is 10 to 25. It is preferable that the relationship between the component (F-1), which decreases the flame retardancy but has a large effect of improving the tracking resistance, and the components (B), (C), and (D), which are flame retardant components, is within the above range because a material superior in balance among the flame retardancy, the tracking resistance, and the low-temperature impact resistance can be obtained. It is preferable that ((B) + (C) + (D))/(F-1) is 10 or more because the resulting composition is high in flame retardancy and is superior in low warpage property and surface smoothness due to superior fluidity during molding processing. The ratio is more preferably 13 or more, and further preferably 16 or more. On the other hand, it is preferable that the ratio is 25 or less because the resulting composition is superior in tracking resistance and superior in low warpage property, surface smoothness, and low-temperature impact resistance due to improvement in toughness. The ratio is more preferably 23 or less, and further preferably 21 or less.

In the thermoplastic polyester resin composition of the present invention, it is preferable that, when a total amount of the (B) phosphinate, the (C) phosphazene compound, and the (D) nitrogen-based flame retardant to be blended in the thermoplastic polyester resin composition is regarded as 100 mass%, the (B) phosphinate accounts for 30 to 65 mass%, the (C) phosphazene compound accounts for 5 to 40 mass%, and the (D) nitrogen-based flame retardant accounts for 30 to 65 mass%. The component (B), the component (C), and the component (D) used in the present invention contribute to improvement of the flame retardancy of the thermoplastic polyester resin composition to be obtained, and also cause deterioration of mechanical properties and hydrolysis resistance during high-temperature molding. It is preferable that the components (B), (C), and (D) are blended at a ratio in the above range because the resulting thermoplastic polyester resin composition is superior in mechanical properties and hydrolysis resistance during high-temperature molding while maintaining high flame retardancy.

When the total amount of the (B) phosphinate, the (C) phosphazene compound, and the (D) nitrogen-based flame retardant is regarded as 100 mass%, the (B) phosphinate more preferably accounts for 34 mass% or more, and further preferably accounts for 36 mass% or more from the viewpoint of flame retardancy. On the other hand, from the viewpoint of mechanical properties and hydrolysis resistance during high-temperature molding, the (B) phosphinate more preferably accounts for 62 mass% or less, and further preferably accounts for 58 mass% or less. The (C) phosphazene compound more preferably accounts for 15 mass% or more, and further preferably accounts for 20 mass% or more from the viewpoint of hydrolysis resistance during high-temperature molding, low warpage property, and surface smoothness. On the other hand, from the viewpoint of flame retardancy and low-temperature impact resistance, the (C) phosphazene compound more preferably accounts for 34 mass% or less, and further preferably accounts for 30 mass% or less. From the viewpoint of flame retardancy, the (D) nitrogen-based flame retardant more preferably accounts for 32 mass% or more, and further preferably accounts for 34 mass% or more. On the other hand, from the viewpoint of mechanical properties and low-temperature impact resistance, the (D) nitrogen-based flame retardant more preferably accounts for 50 mass% or less, and further preferably accounts for 40 mass% or less.

In the thermoplastic polyester resin composition of the present invention, it is preferable to further blend (G) a fibrous reinforcing material. Mechanical strength and heat resistance can be further improved by the (G) fibrous reinforcing material.

Examples of the (G) fibrous reinforcing material include glass fiber, aramid fiber, and carbon fiber. As the glass fiber, it is preferable to use glass fibers that are chopped strand type or roving type glass fibers which are treated with a silane coupling agent such as an aminosilane compound and an epoxy silane compound and/or a binding agent containing urethane, a copolymer formed of an acrylic acid such as an acrylic acid/styrene copolymer, a copolymer formed of maleic anhydride such as a methyl acrylate/methyl methacrylate/maleic anhydride copolymer, vinyl acetate, bisphenol A diglycidyl ether, or one or more epoxy compounds such as a novolac-type epoxy compound. Glass fibers treated with a binding agent containing a copolymer formed of maleic anhydride or containing an epoxy compound are further preferable from the viewpoint that mechanical properties or hydrolysis resistance during high-temperature molding can be further improved. The silane coupling agent and/or the binding agent may be mixed in an emulsion liquid and used. The fiber diameter of the glass fiber is usually preferably in a range of 1 to 30 µm. From the viewpoint of the dispersibility of the glass fiber in the resin, the lower limit value thereof is preferably 5 µm. From the viewpoint of mechanical strength, the upper limit value thereof is preferably 15 µm. Although the fiber cross section is usually circular, a fibrous reinforcing material having an arbitrary cross section such as an elliptical glass fiber, a squashed glass fiber, or a cocoon-shaped glass fiber having an arbitrary aspect ratio can also be used, and there are characteristics in that fluidity during injection molding is improved and a molded article with less warpage is obtained.

The blending amount of the (G) fibrous reinforcing material is preferably 1 to 100 parts by weight with respect to 100 parts by weight of the (A) thermoplastic polyester resin. By blending 1 part by weight or more of the (G) fibrous reinforcing material, mechanical strength, heat resistance, and low-temperature impact resistance can be further improved. The blending amount thereof is more preferably 2 parts by weight or more, and further preferably 3 parts by weight or more. On the other hand, by blending 100 parts by weight or less of the (G) fibrous reinforcing material, mechanical strength and fluidity can be further improved. The blending amount thereof is more preferably 95 parts by weight or less, and further preferably 90 parts by weight or less.

In the resin composition of the present invention, one or more agents such as optional additives, e.g., an antioxidant, heat stability, an ultraviolet absorber, a photostabilizer, a plasticizer, a release agent, an antistatic agent, a dripping inhibitor, carbon black, titanium oxide, and various colored pigments or dyes, or inorganic fillers other than the component (G) may be blended as long as the object of the present invention is not impaired.

In the resin composition of the present invention, a thermoplastic resin other than the component (A) and the component (F) may be blended as long as the object of the present invention is not impaired, and moldability, dimensional accuracy, molding shrinkage, toughness and the like can be improved. Examples of the thermoplastic resin other than the component (A) and the component (F) include a polyacetal resin, a polyurethane resin, an aromatic or aliphatic polyketone resin, a polyphenylene sulfide resin, a polyether ether ketone resin, a polyimide resin, a thermoplastic starch resin, a polyurethane resin, an aromatic polycarbonate resin, a polyarylate resin, a polysulfone resin, a polyether sulfone resin, a polyphenylene ether resin, poly-4-methylpentene-1, a polyether imide resin, a cellulose acetate resin, and a polyvinyl alcohol resin. When a thermoplastic resin other than the component (A) and the component (F) is blended, it is preferable that the proportion of the component (A) is the largest among the thermoplastic resin species in the thermoplastic polyester resin composition.

The thermoplastic polyester resin composition of the present invention can be obtained, for example, by melt-kneading the components (A) to (F), and as necessary, other components.

Examples of the melt-kneading method include a method in which the components (A) to (F), and as necessary, the component (G) and various additives are preliminarily mixed and fed to an extruder or the like for sufficient melt-kneading, and a method in which predetermined amount of each component is fed to an extruder or the like using a fixed amount feeder such as a weight feeder for sufficient melt-kneading.

Examples of the preliminary mixing include a dry blending method and a mixing method using mechanical mixing devices such as a tumble mixer, a ribbon mixer, and a Henschel mixer. The (G) fibrous reinforcing material and an inorganic filler other than the fibrous reinforcing material may be added through a side feeder installed between the feeding portion and the vent portion of a multi-screw extruder such as a twin-screw extruder. In the case of a liquid additive, a method of adding a liquid additive by installing a liquid feeding nozzle between the feeding portion and the vent portion of a multi-screw extruder such as a twin-screw extruder and using a plunger pump, a method of supplying a liquid additive using a metering pump from the feeding portion or the like.

The thermoplastic polyester resin composition of the present invention is preferably pelletized and then subjected to molding processing. Examples of the pelletizing method include a method of extruding the thermoplastic polyester resin composition in the form of strands using a single-screw extruder, a twin-screw extruder, a triple-screw extruder, a conical extruder, a kneader-type mixer, or the like equipped with "uni-melt" or "dulmage" type screw, and then cutting the resulting strands using a strand cutter.

In order to uniformly mix the components (A) to (F), it is preferable from the viewpoint of productivity to knead the thermoplastic polyester resin composition of the present invention by a twin-screw extruder. In the twin-screw extruder, in order to improve the dispersibility of the flame retardants, it is preferable to provide one or more kneading sections, and it is more preferable to provide two or more kneading sections. Regarding the site where the kneading section is disposed, for example, when the component (G) is added from a side feeder, the kneading section is preferably disposed two or more sites in total, namely, at one or more sites on the upstream side from the side feeder in order to promote plasticization and dispersion of the components (A) to (F), and at one or more sites on the downstream side from the side feeder in order to disperse the component (G) in the resin composition while inhibiting breakage of the component (G). It is preferable to use a twin-screw extruder having a ratio of Lk/D to L/D in a range of 12 to 22% where L (mm) is an overall length of a screw of the twin-screw extruder, Lk (mm) is a length of a kneading part in the overall length of the screw, and D (mm) is a diameter of the screw. It is preferable that the total value of Lk/D of the kneading sections at the respective positions is within the above range because an increase in the temperature of the resin composition during melt-kneading is suppressed, thermal degradation of the respective components is inhibited, and the resulting material is superior in flame retardancy, tracking resistance, hydrolysis resistance during high-temperature molding, low warpage property, and surface smoothness.

By melt-molding the thermoplastic polyester resin composition of the present invention, a molded article in the form of a film, fiber, and other various forms can be obtained. Examples of the melt-molding method include injection molding, extrusion molding, and blow molding, and injection molding is particularly preferably used.

In addition to a regular injection molding method, other types of injection molding methods are also known such as gas assisted molding, two-color molding, sandwich molding, in-mold molding, insert molding, and injection press molding, and any of the molding methods can also be applied.

The molded article obtained by melt-molding the thermoplastic polyester resin composition of the present invention preferably has a surface roughness Ra of 0.05 to 1.50 µm. The surface roughness Ra of the molded article is determined as an arithmetic average roughness. When the surface roughness Ra of the molded article is in the above-mentioned range, lifting up of the fibrous reinforcing material on the surface of the molded article is inhibited, so that it is possible to inhibit deterioration of flame retardancy and tracking resistance triggered thereby. In addition, it is preferable because the coloring unevenness of the molded article is suppressed and the appearance is excellent. Regarding the surface roughness Ra of the molded article, for example, by means of increasing the amount of the component (C) in the present invention or controlling the amount of the component (E) within a specific range, the fluidity of the resulting thermoplastic polyester resin composition is improved and a molded article having a surface roughness Ra in the above range can be obtained.

The surface roughness Ra is more preferably 0.10 µm or more from the viewpoint of productivity. On the other hand, from the viewpoint of flame retardancy, tracking resistance, and appearance, the surface roughness is more preferably 1.00 µm or less, and further preferably 0.50 µm or less.

The molded article of the present invention can be used as a molded article for mechanical machine components, electric components, electronic components, and automotive components based on the feature of being superior in flame retardancy, tracking resistance, and hydrolysis resistance during high-temperature molding. In addition, since it is superior in hydrolysis resistance during high-temperature molding, low warpage property, surface smoothness, and low-temperature impact resistance, it can be used as small and thin molded article. The molded article of the present invention is superior in flame retardancy, tracking resistance, and long-term hydrolysis resistance, and thus is particularly useful for electric and electronic components for automobiles.

Specific examples of the mechanical machine parts, electric components, electronic components, and automotive parts include breakers, electromagnetic switches, focus cases, flyback transformers, molded articles for fusers of copying machines and printers, general household electrical appliances, housings of OA equipment and the like, parts of variable capacitor cases, various types of terminal boards, transformers, printed wiring boards, housings, terminal blocks, coil bobbins, connectors, relays, disk drive chassis, switch parts, wall outlet parts, motor components, sockets, plugs, capacitors, various types of casings, resistors, electric and electronic components into which metal terminals and conducting wires are incorporated, computer-related components, audio components such as acoustic components, parts of lighting equipment, telegraphic communication equipment-related components, telephone equipment-related components, components of air conditioners, components of consumer electronics such as VTR and TV, copying machine parts, facsimile machine parts, components of optical devices, components of automotive ignition devices, components for automobile charging devices, connectors for automobiles, high-voltage connectors for automobiles, insulating members such as bus bars, and various types of automotive electrical components.

### EXAMPLES

Next, the effects of the thermoplastic polyester resin composition of the present invention will be specifically described by means of Examples. Raw materials used in each of Examples and Comparative Examples are described below. "%" and "part(s)" described herein all represent mass% and part(s) by weight, and "/" in the following resin names means copolymerization.

### (A) Thermoplastic polyester resin

<A-1> Polybutylene terephthalate resin: A polybutylene terephthalate resin having a carboxyl group amount of 30 eq/t manufactured by Toray Industries, Inc. was used.
<A-2> Polyethylene terephthalate resin: A polyethylene terephthalate resin having a carboxyl group amount of 40 eq/t manufactured by Toray Industries, Inc. was used.

### (B) Phosphinate

<B-1> Aluminum diethylphosphinate: "Exolit" (registered trademark) OP-1240 manufactured by Clariant Japan K.K. was used.

### (C) Phosphazene compound

<C-1> Phenyl phosphonitrilate: "Rabitle" (registered trademark) FP-110 manufactured by FUSHIMI Pharmaceutical Co., Ltd. was used.

### (D) Nitrogen-based flame retardant

<D-1> Melamine cyanurate: MC-4000 manufactured by Nissan Chemical Corporation was used.

### (E) Epoxy compound

### (E-1) Novolac-type epoxy compound

<E-1> Dicyclopentadiene type novolac epoxy: "EPICLON" HP-7200H (epoxy equivalent: 275 g/eq) manufactured by DIC Corporation was used.

### (E-2) Monofunctional epoxy compound

<E-2> Glycidyl ester of Versatic acid: "Cardura E10P" (epoxy equivalent: 241 g/eq) manufactured by Momentive Specialty Chemicals Inc. was used.

### (F) Component

### (F-1) Olefin resin

<F-1> Acid-modified olefin resin: Ethylene/butene-1/maleic anhydride copolymer, "TAFMER" (registered trademark) MH-5020 manufactured by Mitsui Chemicals, Inc. was used.

### (F-2) Polyamide resin

<F-2>: Nylon 610 resin: "Amilan" (registered trademark) CM2001 manufactured by Toray Industries, Inc. was used.

### (G) Fibrous reinforcing material

<G-1> Glass fiber treated with binder containing epoxy compound: Glass fiber ECS03T-187 manufactured by Nippon Electric Glass Co., Ltd., having a diameter of a cross section of 13 µm and a fiber length of 3 mm was used.

### [Method for measuring respective properties]

In Examples and Comparative Examples, properties were evaluated by the measurement methods described below.

### (1) Flame retardancy (burning rank)

A burning test piece having a size of 125 mm × 13 mm × thickness 1.6 mm was obtained using an NEX1000 injection molding machine manufactured by Nissei Plastic Industrial Co., Ltd. under the molding cycle conditions of 10 seconds of an injection time and a pressure holding time in total and 10 seconds of a cooling time, under the temperature conditions of a cylinder temperature of 260°C and a mold temperature of 80°C in the case of using a polybutylene terephthalate resin as the component (A) and under the temperature conditions of a cylinder temperature of 280°C and a mold temperature of 80°C in the case of using a polyethylene terephthalate resin as the component (A). The flame retardancy was evaluated using the obtained burning test piece according to the evaluation criteria for the UL94 vertical test. The flame retardancy was ranked in the order of V-0 > V-1 > V-2, and V-2 was judged to be poor in flame retardancy.

### (2) Tracking resistance (comparative tracking index)

Injection molding was performed using an NEX1000 injection molding machine manufactured by Nissei Plastic Industrial Co., Ltd. under the same injection molding conditions as in the above section (1), affording a square plate having a size of 80 mm × 80 mm × thickness 3 mm. A comparative tracking index was measured using the obtained square plate and using a 0.1% ammonium chloride aqueous solution as an electrolyte solution in accordance with the method for measuring a comparative tracking index specified in IEC60112: 2003. It was evaluated that the larger the value of the comparative tracking index, the better in tracking resistance the sample was, and when the value was 550 V or less, the sample was determined poor in tracking resistance.

### (3) Hydrolysis resistance during high-temperature molding (tensile strength retention rate)

Using an NEX1000 injection molding machine manufactured by Nissei Plastic Industrial Co., Ltd., an ASTM No. 1 dumbbell-shaped (thickness: 1/8 inches) test piece for tensile property evaluation molded in accordance with ASTM D638 (2005) was obtained under the same injection molding conditions as in the above section (1) except for the temperature conditions of a molding temperature of 290°C in the case of using a polybutylene terephthalate resin as the component (A) and a mold temperature of 310°C in the case of using a polyethylene terephthalate resin as the component (A). The obtained ASTM No. 1 dumbbell was placed in a highly accelerated stress test chamber EHS-411 manufactured by ESPEC CORP., set at a temperature of 121°C and a humidity of 100% RH, and subjected to a heat-moisture treatment for 50 hours. For each of the molded articles before and after the heat-moisture treatment, the maximum tensile strength point (tensile strength) was measured in accordance with ASTM D638 (2005), and the mean of the measured values of three specimens was determined. The tensile strength retention rate was determined by the following formula from the maximum tensile strength point after the heat-moisture treatment and the maximum tensile strength point before the heat-moisture treatment. Tensile strength retention rate (%) = (Maximum tensile strength point after heat-moisture treatment ÷ Maximum tensile strength point before heat-moisture treatment) × 100

It was evaluated that the larger the value of the tensile strength retention rate of a material after a heat-moisture treatment time of 50 hours, the better in hydrolysis resistance during high-temperature molding the material was, and when the tensile strength retention rate was less than 60.0%, the material was determined to be poor in hydrolysis resistance during high-temperature molding.

### (4) Low warpage property (amount of deformation of molded article)

Injection molding was performed using an NEX1000 injection molding machine manufactured by Nissei Plastic Industrial Co., Ltd. under the same injection molding conditions as in the above section (1), affording a square plate having a size of 80 mm × 80 mm × thickness 1 mm. The obtained square plate was placed at rest on a horizontal surface plate, and a lifting amount with respect to a diagonal surface plate in a state where any one of four sides of the square plate was pressed was measured as an amount of deformation using a universal projector (V-16A (manufactured by Nikon Corporation)). It was evaluated that the smaller the amount of deformation was, the better in low warpage property the sample was, and when the amount of deformation was 9.0 mm or more, the sample was determined to be poor in low warpage property.

### (5) Surface smoothness (arithmetic average roughness)

The surface roughness of the central portion of the burning test piece obtained in the above section (1) was measured in the resin flow direction (MD) using a surface roughness meter (SURFCOM 130A manufactured by ACCRETECH), and an arithmetic average roughness (surface roughness Ra) was calculated. The measurement conditions were a cut-off value of 0.8 mm, an evaluation length of 10 mm, and a measurement speed of 0.6 mm/s. It was evaluated that the smaller the arithmetic average roughness, the better in surface smoothness the sample was, and when the arithmetic average roughness was more than 1.50 µm, the sample was determined to be poor in surface smoothness.

### (6) Low-temperature impact resistance (Izod impact strength)

Injection molding was performed using an NEX1000 injection molding machine manufactured by Nissei Plastic Industrial Co., Ltd. under the same injection molding conditions as in the above section (1), affording a mold-notched Izod impact test specimen having a thickness of 12 mm. The Izod impact strength of the obtained test piece was measured in accordance with ASTM D256 in an atmosphere at -40°C. It was evaluated that the higher the Izod impact strength, the better in low-temperature impact resistance the sample was, and when the Izod impact strength was 45 J/m or less, the sample was determined to be poor in low-temperature impact resistance.

### [Examples 1 to 16], [Comparative Examples 1 to 7]

A co-rotating twin-screw extruder equipped with a vent (TEX-30α manufactured by The Japan Steel Works, Ltd.) with a screw diameter of 30 mm and a L/D of 35 was used, and the (A) thermoplastic polyester resin, the (B) phosphinate, the (C) phosphazene compound, the (D) nitrogen-based flame retardant, the (E) epoxy compound, and the (F) olefin resin or polyamide resin, and as necessary, the (G) fibrous reinforcing material were mixed at compositions shown in Tables 1 to 3, and the resulting mixture was added from the feeding portion of the twin-screw extruder. The (G) fibrous reinforcing material was added through a side feeder installed between the feeding portion and the vent portion. Further, when a polybutylene terephthalate resin was used as the component (A), the cylinder temperature was set to 250°C, and when a polyethylene terephthalate resin was used as the component (A), the cylinder temperature was set to 270°C. Of the overall L/D of the screw, the total Lk/D of kneading was arranged to 18%, and was arranged to 24% only in Example 15. The mixture was melt-mixed under extrusion conditions of a screw rotation speed of 200 rpm, discharged in the form of a strand, passed through a cooling bath, and pelletized with a strand cutter.

The obtained pellets were dried in a hot air dryer at a temperature of 110°C for 6 hours, and then evaluated by the above-described method, and the results thereof are shown in Tables 1 to 3.

The requirement regarding the total of the parts by weight of the (B) phosphinate, the parts by weight of the (C) phosphazene compound, and the nitrogen-based flame retardant (D) ((the parts by weight of the component (B) relative to 100 parts by weight of the component (A)) + (the parts by weight of the component (C) relative to 100 parts by weight of component (A)) + (the parts by weight of the component (D) relative to 100 parts by weight of the component (A))) is expressed as "Requirement (i): (B) + (C) + (D)".

The requirement regarding the total of the parts by weight of the (B) phosphinate, the parts by weight of the (C) phosphazene compound, and the nitrogen-based flame retardant (D) relative to the parts by weight of the component (F-1) ((the parts by weight of the component (B) relative to 100 parts by weight of the component (A)) + (the parts by weight of the component (C) relative to 100 parts by weight of the component (A)) + (the parts by weight of the component (D) relative to 100 parts by weight of the component (A)))/(the parts by weight of the component (F-1) relative to 100 parts by weight of the component (A))) is expressed as "Requirement (ii): (B) + (C) + (D)/(F-1)".

When the total amount of the (B) phosphinate, the (C) phosphazene compound, and the (D) nitrogen-based flame retardant is regarded as 100 mass%, the content rates (mass%) of the component (B), the component (C), and the component (D) were described as "Content rate of (B) in (B), (C), and (D)", "Content rate of (C) in (B), (C), and (D)", and "Content rate of (D) in (B), (C), and (D)", respectively.

**[Table 1]**

| | Code | Unit | EXAMPLES | | | | | | | |
|---|---|---|---|---|---|---|---|---|---|---|
| | | | 1 | 2 | 3 | 4 | 5 | 6 | 7 | 8 |
| (A) Thermoplastic polyester resin | A-1 | parts by weight | 100 | | 100 | 100 | 100 | 100 | 100 | 100 |
| | A-2 | parts by weight | | 100 | | | | | | |
| (B) Phosphinate | B-1 | parts by weight | 27.5 | 27.5 | 29.0 | 21.5 | 15.0 | 26.0 | 33.0 | 34.5 |
| (C) Phosphazene compound | C-1 | parts by weight | 14.0 | 14.0 | 10.5 | 24.0 | 38.0 | 12.0 | 14.0 | 18.0 |
| (D) Nitrogen-based flame retardant | D-1 | parts by weight | 24.0 | 24.0 | 26.0 | 20.0 | 12.5 | 22.5 | 25.5 | 27.0 |
| (E) Epoxy compound | E-1 | parts by weight | 2.0 | 2.0 | 2.0 | 2.0 | 2.0 | 2.0 | 2.0 | 2.0 |
| | E-2 | parts by weight | 1.5 | 1.5 | 1.5 | 1.5 | 1.5 | 1.5 | 1.5 | 1.5 |
| (F-1) Olefin resin | F-1 | parts by weight | 3.5 | 3.5 | 3.5 | 3.5 | 3.5 | 3.5 | 3.5 | 3.5 |
| (F-2) Polyamide resin | F-2 | parts by weight | 7.0 | 7.0 | 7.0 | 7.0 | 7.0 | 7.0 | 7.0 | 7.0 |
| (G) Fibrous reinforcing material | G-1 | parts by weight | 59.5 | 59.5 | 59.5 | 59.5 | 59.5 | 59.5 | 59.5 | 59.5 |
| Requirement (i): (B) + (C) + (D) | | parts by weight | 65.5 | 65.5 | 65.5 | 65.5 | 65.5 | 60.5 | 72.5 | 79.5 |
| Requirement (ii) : ((B) + (C) + (D)) / (F-1) | | - | 18.7 | 18.7 | 18.7 | 18.7 | 18.7 | 17.3 | 20.7 | 22.7 |
| Content rate of (B) in (B), (C), and (D) | | mass% | 42.0 | 42.0 | 44.3 | 32.8 | 22.9 | 43.0 | 45.5 | 43.4 |
| Content rate of (C) in (B), (C), and (D) | | mass% | 21.4 | 21.4 | 16.0 | 36.6 | 58.0 | 19.8 | 19.3 | 22.6 |
| Content rate of (D) in (B), (C), and (D) | | mass% | 36.6 | 36.6 | 39.7 | 30.5 | 19.1 | 37.2 | 35.2 | 34.0 |
| (1) Burning rank | | Determination | V-0 | V-0 | V-0 | V-0 | V-1 | V-0 | V-0 | V-0 |
| (2) Comparative tracking index | | V | 600 | 600 | 600 | 600 | 600 | 600 | 600 | 600 |
| (3) Hydrolysis resistance during high-temperature molding: tensile strength before treatment | | MPa | 107 | 98 | 105 | 103 | 104 | 109 | 101 | 98 |
| (3) Hydrolysis resistance during high-temperature molding: tensile strength after treatment | | MPa | 79 | 59 | 74 | 70 | 70 | 80 | 67 | 62 |
| (3) Hydrolysis resistance during high-temperature molding: tensile strength retention rate | | % | 73.8 | 60.2 | 70.5 | 68.0 | 67.3 | 73.4 | 66.3 | 63.3 |
| (4) Amount of deformation of molded article | | mm | 3.5 | 5.2 | 5.0 | 3.6 | 4.1 | 5.6 | 4.9 | 5.8 |
| (5) Arithmetic average roughness | | µm | 0.24 | 0.34 | 0.31 | 0.25 | 0.29 | 0.33 | 0.28 | 0.56 |
| (6) Izod impact strength | | J/m | 60 | 55 | 60 | 55 | 50 | 58 | 54 | 49 |

**[Table 2]**

| | Code | Unit | EXAMPLES | | | | | | | |
|---|---|---|---|---|---|---|---|---|---|---|
| | | | 9 | 10 | 11 | 12 | 13 | 14 | 15 | 16 |
| (A) Thermoplastic polyester resin | A-1 | parts by weight | 100 | 100 | 100 | 100 | 100 | 100 | 100 | 100 |
| | A-2 | parts by weight | | | | | | | | |
| (B) Phosphinate | B-1 | parts by weight | 27.5 | 27.5 | 27.5 | 27.5 | 27.5 | 27.5 | 27.5 | 27.5 |
| (C) Phosphazene compound | C-1 | parts by weight | 14.0 | 14.0 | 14.0 | 14.0 | 14.0 | 14.0 | 14.0 | 14.0 |
| (D) Nitrogen-based flame retardant | D-1 | parts by weight | 24.0 | 24.0 | 24.0 | 24.0 | 24.0 | 24.0 | 24.0 | 24. 0 |
| (E) Epoxy compound | E-1 | parts by weight | 3.5 | 2.0 | 2.0 | 2.0 | 1.0 | 2.5 | 2.0 | 2.0 |
| | E-2 | parts by weight | | 1.5 | 1.5 | 1.5 | 2.5 | 1.0 | 1.5 | 1.5 |
| (F-1) Olefin resin | F-1 | parts by weight | 3.5 | 9.5 | 2.5 | 7.0 | 3.5 | 3.5 | 3.5 | 3.5 |
| (F-2) Polyamide resin | F-2 | parts by weight | 7.0 | | 7.0 | 7.0 | 7.0 | 7.0 | 7.0 | 7.0 |
| (G) Fibrous reinforcing material | G-1 | parts by weight | 59.5 | 59.5 | 59.5 | 59.5 | 59.5 | 59.5 | 59.5 | |
| Requirement (i): (B) + (C) + (D) | | parts by weight | 65.5 | 65.5 | 65.5 | 65.5 | 65.5 | 65.5 | 65.5 | 65.5 |
| Requirement (ii) : ((B) + (C) + (D)) / (F-1) | | - | 18.7 | 6.9 | 26.2 | 9.4 | 18.7 | 18.7 | 18.7 | 18.7 |
| Content rate of (B) in (B), (C), and (D) | | mass% | 42.0 | 42.0 | 42.0 | 42.0 | 42.0 | 42.0 | 42.0 | 42.0 |
| Content rate of (C) in (B), (C), and (D) | | mass% | 21.4 | 21.4 | 21.4 | 21.4 | 21.4 | 21.4 | 21.4 | 21.4 |
| Content rate of (D) in (B), (C), and (D) | | mass% | 36.6 | 36.6 | 36.6 | 36.6 | 36.6 | 36.6 | 36.6 | 36.6 |
| (1) Burning rank | | Determination | V-0 | V-1 | V-0 | V-1 | V-0 | V-0 | V-0 | V-0 |
| (2) Comparative tracking index | | V | 600 | 600 | 575 | 600 | 600 | 600 | 600 | 600 |
| (3) Hydrolysis resistance during high-temperature molding: tensile strength before treatment | | MPa | 102 | 97 | 102 | 100 | 101 | 100 | 97 | 53 |
| (3) Hydrolysis resistance during high-temperature molding: tensile strength after treatment | | MPa | 68 | 60 | 64 | 67 | 63 | 66 | 59 | 37 |
| (3) Hydrolysis resistance during high-temperature molding: tensile strength retention rate | | % | 66.7 | 61.9 | 62.7 | 67.0 | 62.4 | 66.0 | 60.8 | 69.8 |
| (4) Amount of deformation of molded article | | mm | 8.6 | 4.1 | 6.0 | 5.5 | 3.9 | 6.7 | 8.3 | 8.9 |
| (5) Arithmetic average roughness | | µm | 1.23 | 0.31 | 0.50 | 0.63 | 0.28 | 0.51 | 0.88 | 0.11 |
| (6) Izod impact strength | | J/m | 50 | 59 | 47 | 59 | 56 | 55 | 54 | 46 |

**[Table 3]**

| | Code | Unit | Comparative Examples | | | | | | |
|---|---|---|---|---|---|---|---|---|---|
| | | | 1 | 2 | 3 | 4 | 5 | 6 | 7 |
| (A) Thermoplastic polyester resin | A-1 | parts by weight | 100 | 100 | 100 | 100 | 100 | 100 | 100 |
| | A-2 | parts by weight | | | | | | | |
| (B) Phosphinate | B-1 | parts by weight | 28.0 | 13.5 | 25.0 | 36.0 | 27.5 | 27.5 | 43.7 |
| (C) Phosphazene compound | C-1 | parts by weight | 8.0 | 42.0 | 10.0 | 18.5 | 14.0 | 14.0 | 10.8 |
| (D) Nitrogen-based flame retardant | D-1 | parts by weight | 24.5 | 10.0 | 20.5 | 31.0 | 24.0 | 24.0 | 11.1 |
| (E) Epoxy compound | E-1 | parts by weight | 2.0 | 2.0 | 2.0 | 2.0 | 1.4 | 4.4 | |
| | E-2 | parts by weight | 1.5 | 1.5 | 1.5 | 1.5 | 0.7 | 2.2 | |
| (F-1) Olefin resin | F-1 | parts by weight | 3.5 | 3.5 | 3.5 | 3.5 | 3.5 | 3.5 | |
| (F-2) Polyamide resin | F-2 | parts by weight | 7.0 | 7.0 | 7.0 | 7.0 | 7.0 | 7.0 | |
| (G) Fibrous reinforcing material | G-1 | parts by weight | 59.5 | 59.5 | 59.5 | 59.5 | 59.5 | 59.5 | 71.0 |
| Requirement (i): (B) + (C) + (D) | | parts by weight | 60.5 | 65.5 | 55.5 | 85.5 | 65.5 | 65.5 | 65.6 |
| Requirement (ii) : ((B) + (C) + (D)) / (F-1) | | - | 17.3 | 18.7 | 15.9 | 24.4 | 18.7 | 18.7 | - |
| Content rate of (B) in (B), (C), and (D) | | mass% | 46.3 | 20.6 | 45.0 | 42.1 | 42.0 | 42.0 | 66.6 |
| Content rate of (C) in (B), (C), and (D) | | mass% | 13.2 | 64.1 | 18.0 | 21.6 | 21.4 | 21.4 | 16.5 |
| Content rate of (D) in (B), (C), and (D) | | mass% | 40.5 | 15.3 | 36.9 | 36.3 | 36.6 | 36.6 | 16.9 |
| (1) Burning rank | | Determination | V-0 | V-2 | V-1 | V-0 | V-0 | V-2 | V-0 |
| (2) Comparative tracking index | | V | 600 | 600 | 600 | 600 | 600 | 600 | 550 |
| (3) Hydrolysis resistance during high-temperature molding: tensile strength before treatment | | MPa | 99 | 101 | 104 | 94 | 100 | 93 | 105 |
| (3) Hydrolysis resistance during high-temperature molding: tensile strength after treatment | | MPa | 57 | 70 | 65 | 51 | 52 | 58 | 57 |
| (3) Hydrolysis resistance during high-temperature molding: tensile strength retention rate | | % | 57.6 | 69.3 | 62.5 | 54.3 | 52.0 | 62.4 | 54.3 |
| (4) Amount of deformation of molded article | | mm | 9.4 | 4.0 | 9.9 | 8.9 | 14.3 | 12.7 | 9.1 |
| (5) Arithmetic average roughness | | µm | 1.57 | 0.32 | 1.73 | 1.86 | 2.14 | 1.98 | 1. 66 |
| (6) Izod impact strength | | J/m | 36 | 37 | 41 | 34 | 36 | 31 | 29 |

Based on the comparison between Examples and Comparative Examples, by setting the blending amounts of the component (B), the component (C), the component (D), the component (E), and the component (F) with respect to 100 parts by weight of the (A) thermoplastic polyester resin in specific ranges, a material superior in balance among flame retardancy, tracking resistance, hydrolysis resistance during high-temperature molding, low warpage property, surface smoothness, and low-temperature impact resistance was obtained.

## Claims

1. A thermoplastic polyester resin composition obtained by blending 0.1 to 50 parts by weight of (B) at least one phosphinate selected from phosphinate salts and diphosphinate salts, more than 10 parts by weight and 40 parts by weight or less of (C) a phosphazene compound, 0.1 to 50 parts by weight of (D) a nitrogen-based flame retardant, 2.5 to 6.5 parts by weight of (E) an epoxy compound, and 0.1 to 20 parts by weight of at least one resin selected from (F-1) an olefin resin and (F-2) a polyamide resin with 100 parts by weight of (A) a thermoplastic polyester resin, the thermoplastic polyester resin composition satisfying a requirement (i) below:
(i) a total of parts by weight of the (B) at least one phosphinate selected from phosphinate salts and diphosphinate salts, parts by weight of the (C) phosphazene compound and parts by weight of the (D) nitrogen-based flame retardant ((parts by weight of the component (B) relative to 100 parts by weight of the component (A)) + (parts by weight of the component (C) relative to 100 parts by weight of the component (A)) + (parts by weight of the component (D) relative to 100 parts by weight of the component (A))) is 60 to 80 parts by weight.

2. The thermoplastic polyester resin composition according to claim 1, wherein the thermoplastic polyester resin composition satisfies a requirement (ii) below:
(ii) a ratio of a total of parts by weight of the (B) at least one phosphinate selected from phosphinate salts and diphosphinate salts, parts by weight of the (C) phosphazene compound and parts by weight of the (D) nitrogen-based flame retardant to parts by weight of the (F-1) olefin resin ((parts by weight of the component (B) relative to 100 parts by weight of the component (A)) + (parts by weight of the component (C) relative to 100 parts by weight of the component (A)) + (parts by weight of the component (D) relative to 100 parts by weight of the component (A))/(parts by weight of the component (F-1) relative to 100 parts by weight of the component (A))) is 10 to 25.

3. The thermoplastic polyester resin composition according to claim 1, wherein, when a total amount of the (B) at least one phosphinate selected from phosphinate salts and diphosphinate salts, the (C) phosphazene compound, and the (D) nitrogen-based flame retardant is regarded as 100 mass%, the (B) at least one phosphinate selected from phosphinate salts and diphosphinate salts accounts for 30 to 65 mass%, the (C) phosphazene compound accounts for 5 to 40 mass%, and the (D) nitrogen-based flame retardant accounts for 30 to 65 mass%.

4. The thermoplastic polyester resin composition according to claim 1, wherein the (E) epoxy compound includes at least (E-1) a novolac-type epoxy compound and (E-2) a monofunctional epoxy compound, and a ratio of blending amounts of the(E-1) novolac-type epoxy compound and the (E-2) monofunctional epoxy compound ((parts by weight of the component (E-1) relative to 100 parts by weight of the component (A))/(parts by weight of the component (E-2) relative to 100 parts by weight of the component (A))) is in a range of 0.5 to 2.0.

5. A method for producing the thermoplastic polyester resin composition according to any one of claims 1 to 4, wherein melt kneading is performed using a twin-screw extruder having a ratio of Lk/D to L/D in a range of 12 to 22% where L (mm) is an overall length of a screw of the twin-screw extruder, Lk (mm) is a length of a kneading part in the overall length of the screw, and D (mm) is a diameter of the screw.

6. A molded article being obtained by melt-molding the thermoplastic polyester resin composition according to any one of claims 1 to 4.

7. The molded article according to claim 6, wherein the molded article has a surface roughness Ra of 0.05 to 1.50 µm.

## Patentansprüche

1. Thermoplastische Polyesterharz-Zusammensetzung, die durch Vermischen von 0,1 bis 50 Gewichtsteilen zumindest eines Phosphinats (B), das aus Phosphinat-Salzen und Diphosphinat-Salzen ausgewählt ist, von mehr als 10 Gewichtsteilen und 40 Gewichtsteilen oder weniger einer Phosphazen-Verbindung (C), von 0,1 bis 50 Gewichtsteilen eines Flammschutzmittels (D) auf Stickstoffbasis, von 2,5 bis 6,5 Gewichtsteilen einer Epoxy-Verbindung (E) und von 0,1 bis 20 Gewichtsteilen zumindest eines Harzes, das aus einem Olefinharz (F-1) und einem Polyamidharz (F-2) ausgewählt ist, mit 100 Gewichtsteilen eines thermoplastischen Polyesterharzes (A) erhältlich ist, wobei die thermoplastische Polyesterharz-Zusammensetzung die nachfolgende Bedingung (i) erfüllt:
(i) die Summe der Gewichtsteile des zumindest einen Phosphinats (B), das aus Phosphinat-Salzen und Diphosphinat-Salzen ausgewählt ist, der Gewichtsteile der Phosphazen-Verbindung (C) und der Gewichtsteile des Flammschutzmittels (D) auf Stickstoffbasis ((Gewichtsteile der Komponente (B) bezogen auf 100 Gewichtsteile der Komponente (A)) + (Gewichtsteile der Komponente (C) bezogen auf 100 Gewichtsteile der Komponente (A)) + (Gewichtsteile der Komponente (D) bezogen auf 100 Gewichtsteile der Komponente (A)) 60 bis 80 Gewichtsteile beträgt.

2. Thermoplastische Polyesterharz-Zusammensetzung nach Anspruch 1, wobei die thermoplastische Polyesterharz-Zusammensetzung die nachfolgende Bedingung (ii) erfüllt:
(ii) das Verhältnis zwischen der Summe der Gewichtsteile des zumindest einen Phosphinats (B), das aus Phosphinat-Salzen und Diphosphinat-Salzen ausgewählt ist, der Gewichtsteile der Phosphazen-Verbindung (C) und der Gewichtsteile des Flammschutzmittels (D) auf Stickstoffbasis und den Gewichtsteilen des Olefinharzes (F-1) ((Gewichtsteile der Komponente (B) bezogen auf 100 Gewichtsteile der Komponente (A)) + (Gewichtsteile der Komponente (C) bezogen auf 100 Gewichtsteile der Komponente (A)) + (Gewichtsteile der Komponente (D) bezogen auf 100 Gewichtsteile der Komponente (A)) / (Gewichtsteile der Komponente (F-1) bezogen auf 100 Gewichtsteile der Komponente (A))) 10 bis 25 beträgt.

3. Thermoplastische Polyesterharz-Zusammensetzung nach Anspruch 1, wobei, wenn die Summe des zumindest einen Phosphinats (B), das aus Phosphinat-Salzen und Diphosphinat-Salzen ausgewählt ist, der Phosphazen-Verbindung (C) und des Flammschutzmittels (D) auf Stickstoffbasis als 100 Massen-% angenommen wird, das zumindest eine Phosphinat (B), das aus Phosphinat-Salzen und Diphosphinat-Salzen ausgewählt ist, 30 bis 65 Massen-% ausmacht, die Phosphazen-Verbindung (C) 5 bis 40 Massen-% ausmacht und das Flammschutzmittel (D) auf Stickstoffbasis 30 bis 65 Massen-% ausmacht.

4. Thermoplastische Polyesterharz-Zusammensetzung nach Anspruch 1, wobei die Epoxy-Verbindung (E) zumindest eine Epoxy-Verbindung (E-1) vom Novolak-Typ und eine monofunktionelle Epoxy-Verbindung (E-2) umfasst und wobei das Verhältnis zwischen der Mischmengen der Epoxy-Verbindung (E-1) vom Novolak-Typ und der monofunktionellen Epoxy-Verbindung (E-2) ((Gewichtsteile der Komponente (E-1) bezogen auf 100 Gewichtsteile der Komponente (A)) / (Gewichtsteile der Komponente (E-2) bezogen auf 100 Gewichtsteile der Komponente (A)) in einem Bereich von 0,5 bis 2,0 liegt.

5. Verfahren zur Herstellung einer thermoplastischen Polyesterharz-Zusammensetzung nach einem der Ansprüche 1 bis 4, wobei Schmelzkneten unter Verwendung eines Doppelschneckenextruders durchgeführt wird, der ein Verhältnis zwischen Lk/D und L/D in einem Bereich von 12 % bis 22 % aufweist, wobei L (mm) die Gesamtlänge einer Schnecke des Doppelschneckenextruders ist, Lk (mm) die Länge eines Knetteils in der Gesamtlänge der Schnecke ist und D (mm) der Durchmesser der Schnecke ist.

6. Formteil, der durch Schmelzformen einer thermoplastischen Polyesterharz-Zusammensetzung nach einem der Ansprüche 1 bis 4 erhältlich ist.

7. Formteil nach Anspruch 6, wobei das Formteil eine Oberflächenrauigkeit Ra von 0,05 bis 1,50 µm aufweist.

## Revendications

1. Composition de résine de polyester thermoplastique obtenue par mélange de 0,1 à 50 parties en poids de (B) au moins un phosphinate choisi parmi des sels de phosphinate et des sels de diphosphinate, de plus de 10 parties en poids et de 40 parties en poids ou moins de (C) un composé de phosphazène, de 0,1 à 50 parties en poids de (D) un retardateur de flamme à base d'azote, de 2,5 à 6,5 parties en poids de (E) un composé époxy, et de 0,1 à 20 parties en poids d'au moins une résine choisie parmi (F-1) une résine d'oléfine et (F-2) une résine de polyamide avec 100 parties en poids de (A) une résine de polyester thermoplastique, la composition de résine de polyester thermoplastique satisfaisant à une exigence (i) ci-dessous :
(i) un total de parties en poids de (B) au moins un phosphinate choisi parmi des sels de phosphinate et des sels de diphosphinate, de parties en poids de (C) le composé de phosphazène et de parties en poids de (D) le retardateur de flamme à base d'azote ((parties en poids du composant (B) par rapport à 100 parties en poids du composant (A)) + (parties en poids du composant (C) par rapport à 100 parties en poids du composant (A)) + (parties en poids du composant (D) par rapport à 100 parties en poids du composant (A))) est de 60 à 80 parties en poids.

2. Composition de résine de polyester thermoplastique selon la revendication 1, dans laquelle la composition de résine de polyester thermoplastique satisfait à une exigence (ii) ci-dessous :
(ii) un rapport d'un total de parties en poids de (B) au moins un phosphinate choisi parmi des sels de phosphinate et des sels de diphosphinate, de parties en poids de (C) le composé de phosphazène et de parties en poids de (D) le retardateur de flamme à base d'azote sur des parties en poids de la résine d'oléfine (F-1) ((parties en poids du composant (B) par rapport à 100 parties en poids du composant (A)) + (parties en poids du composant (C) par rapport à 100 parties en poids du composant (A)) + (parties en poids du composant (D) par rapport à 100 parties en poids du composant (A))/(parties en poids du composant (F-1) par rapport à 100 parties en poids du composant (A)) est de 10 à 25.

3. Composition de résine de polyester thermoplastique selon la revendication 1, dans laquelle lorsqu'une quantité totale de (B) au moins un phosphinate choisi parmi des sels de phosphinate et des sels de diphosphinate, de (C) le composé de phosphazène et de (D) le retardateur de flamme à base d'azote est considérée comme une masse de 100, le (B) au moins un phosphinate choisi parmi des sels de phosphinate et des sels de diphosphinate représente une masse de 30 à 65, le (C) composé de phosphazène représente une masse de 5 à 40, et le (D) retardateur de flamme à base d'azote représente une masse de 30 à 65.

4. Composition de résine de polyester thermoplastique selon la revendication 1, dans laquelle le (E) composé époxy inclut au moins (E-1) un composé époxy de type novolaque et (E-2) un composé époxy monofonctionnel, et un rapport des quantités de mélange du (E-1) composé époxy de type novolaque et du (E-2) composé époxy monofonctionnel ((parties en poids du composant (E-1) par rapport à 100 parties en poids du composant (A))/(parties en poids du composant (E-2) par rapport à 100 parties en poids du composant (A)) est compris entre 0,5 et 2,0.

5. Procédé de production de la composition de résine polyester thermoplastique selon l'une quelconque des revendications 1 à 4, dans lequel le malaxage à l'état fondu est effectué à l'aide d'une extrudeuse à deux vis présentant un rapport de Lk/D à L/D dans une plage de 12 à 22 % où L (mm) est une longueur totale d'une vis de l'extrudeuse à deux vis, Lk (mm) est une longueur d'une partie de malaxage dans la longueur totale de la vis, et D (mm) est un diamètre de la vis.

6. Article moulé obtenu par le moulage à l'état fondu d'une composition de résine de polyester thermoplastique selon l'une quelconque des revendications 1 à 4.

7. Article moulé selon la revendication 6, dans lequel l'article moulé présente une rugosité de surface Ra de 0,05 à 1,50 µm.
